# EUROPEAN PATENT APPLICATION

(11) **EP 3 760 599 A1**
(43) Date of publication of application: **06.01.2021**
(21) Application number: 19020414.9
(22) Date of filing: 02.07.2019
(51) Int. Cl.: C03C 17/00, B60J 1/00, B60J 1/20, B60S 1/02

(54) **GLAZING FOR A VEHICLE AND VEHICLE HAVING SUCH GLAZING**

(71) Applicant: Dr.Ing. h.c. F. Porsche Aktiengesellschaft, 70435 Stuttgart (DE)
(72) Inventor: Sebastio Correia, Pedro, 71672 Marbach am Neckar (DE)

(57) **Abstract**

The invention provides a glazing (10) for a vehicle (11) characterized in that the glazing (10) is adapted such that rainwater runoff (12) is guided along predefined paths.

The invention further provides a corresponding vehicle (11), particularly sportscar (11) or other automobile.

## Description

The present invention pertains to a glazing for a vehicle. The invention further relates to a corresponding vehicle, particularly sportscar or other automobile.

### Background art

When a car is subjected to rain, windscreen wipers are generally used to move rainwater out of sight to promptly clear the driver's field of view. Depending on driving speed, the water is then directed towards the roof by a gutter on the A-pillar. On the side window, again depending on driving speed, the water flows laterally to the rear in an uncontrolled fashion.

DE 10 2012 206 767 A1 and DE 10 2014 202 560 A1 both teach homogeneous water drainage achieved by structuring of the windshield.

JP 58122220 A, DE 10 2012 221 247 A1, and JP 2016210288 relate to hydrophobic coating.

### Disclosure of the invention

The invention provides a glazing for a vehicle as well as a corresponding vehicle, particularly sportscar or other automobile, as per the independent claims.

Embodiments of the invention are set out in the dependent claims.

### Brief description of drawings

Figure 1 shows a sidelite of a sportscar.
Figure 2 shows nanocones.

### Embodiment of the invention

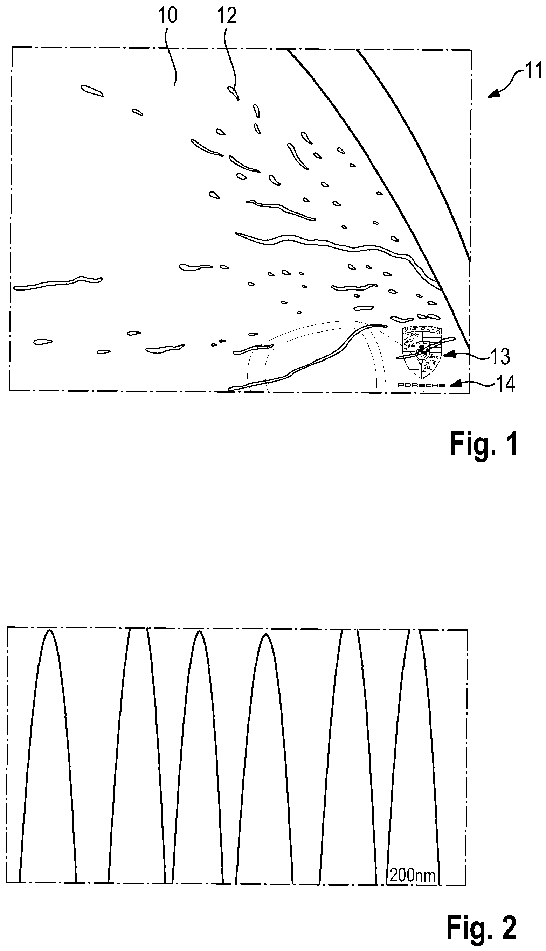

Figure 1 illustrates a sidelite (10) of a sportscar (11). As may be gathered from the drawing, rainwater runoff (12) is guided along predefined paths such that the runoff (12) forms a manufacturer logo (13), lettering (14), or other pattern (not depicted), which effect is achieved by microstructuring or nanostructuring. It is well understood that an alternative embodiment may take the form of a backlite or other glazing (10) and may be integrated with a different type of car (11) without departing from the scope of the invention.

As is known in the art, there are many different processes available for surface microstructuring and nanostructuring, including milling, laser cutting, hot forming, or lithographic processes. For instance, with nanoimprint lithography, an embossing rather than a photolithographic process is employed, wherein a stamp (negative) forms nanostructures in specially coated materials (positive), which are then exposed to ultraviolet (UV) light or thermally cured. Such technology is known for its extreme precision into the low nanometer range as well as its potentially high surface throughput, which allows for inexpensive mass production. An advanced nanoimprint lithography process as per the invention can create structures stretching into the micrometer-to-nanometer range, using a special sol-gel varnish that is applied to the glass substrate. A flexible stamp presses the nanostructure into this layer, whereupon thermal treatment is applied to harden the material. This process may be combined with other processes such as electron beam evaporation, solid phase crystallization, and wet chemical etching.

Another option will now be elucidated referencing Figure 2. Here, tapered conical nanotextures are applied to fabricate the multifunctional surface of the sidelite (10). These slender conical features result in large topographic roughness, while the axial gradient in the effective refractive index minimizes reflection through adiabatic index-matching between air and the substrate. These nanostructures demonstrate structural superhydrophilicity or, in combination with a suitable chemical coating, robust superhydrophobicity.

## Claims

1. Glazing (10) for a vehicle (11),
**characterized in that**
- the glazing (10) is adapted such that rainwater runoff (12) is guided along predefined paths.

2. Glazing (10) as per claim 1,
**characterized in that**
- the paths are predefined such that the runoff (12) forms a manufacturer logo (13).

3. Glazing (10) as per claim 1 or 2,
**characterized in that**
- the paths are predefined such that the runoff (12) forms lettering (14).

4. Glazing (10) as per any of claims 1 through 3,
**characterized in that**
- the paths are predefined such that the runoff (12) forms a pattern.

5. Glazing (10) as per any of claims 1 through 4,
**characterized in that**
- the glazing (10) exhibits nanostructure.

6. Glazing (10) as per claim 5,
**characterized in that**
- the nanostructure is created by means of nanoimprint lithography.

7. Glazing (10) as per any of claims 1 through 6,
**characterized in that**
- the glazing (10) is a sidelite (10).

8. Vehicle (11) having a sidelite (10) as per claim 7.

9. Car (11) as per claim 8.

10. Sportscar (11) as per claim 9.
